# FASCICULE DE BREVET EUROPEEN

(11) **EP 3 366 520 B1**
(45) Date de publication et mention de la délivrance du brevet: **03.07.2019**
(21) Numéro de dépôt: 18157630.7
(22) Date de dépôt: 20.02.2018
(51) Int. Cl.: B60R 9/048, B60R 9/10

(54) **PORTE-VÉLO**
FAHRRADTRÄGER
BIKE MOUNT

(30) Priorité: 23.02.2017 FR 1751462
(43) Date de publication de la demande: 29.08.2018
(73) Titulaire: MGTS SA, 1213 Petit Lancy (CH)
(72) Inventeur: ROYER, Nicolas, 39200 LA RIXOUSE (FR)
(74) Mandataire: Decobert, Jean-Pascal

(56) Documents cités:
- WO-A1-03/106221
- US-B1- 6 439 397

## Description

### DOMAINE TECHNIQUE DE L'INVENTION

L'invention concerne le domaine des porte-vélos. Elle concerne plus particulièrement un porte-vélo du type comprenant un rail longitudinal sur lequel les roues du vélo sont destinées à être déposées et un bras de retenue dont l'extrémité distale est destinée à retenir le vélo en position sensiblement verticale sur le rail longitudinal en venant saisir une partie de son cadre.

### ÉTAT DE LA TECHNIQUE

Il existe plusieurs porte-vélos de ce type.

Notamment, le document de brevet WO 2003/106221 A1 décrit un porte-vélo comprenant :
- un rail longitudinal sur lequel des roues du vélo sont destinées à être posées,
- un bras de retenue comprenant successivement une première portion, un coude et une deuxième portion, la première portion étant fixée transversalement au rail longitudinal et la deuxième portion formant une coulisse supportant une première mâchoire d'une pince de préhension, et
- un coulisseau monté mobile en translation dans la coulisse et supportant une seconde mâchoire de la pince de préhension, et
- un système d'entraînement du coulisseau dans la coulisse pour pouvoir rapprocher et éloigner successivement la seconde mâchoire de la première mâchoire de la pince de préhension,
le bras de retenue, le coulisseau et le système d'entraînement étant configurés de sorte que les mâchoires de la pince de préhension puissent être serrées autour d'une partie d'un cadre du vélo notamment lorsque les roues du vélo sont posées sur le rail longitudinal.

Le système d'entraînement du porte-vélo selon le document de brevet WO 2003/106221 A1 comprend un élément élastique constitué par un ressort hélicoïdal et configuré pour tendre à maintenir les mâchoires de la pince de préhension écartées. Le ressort hélicoïdal est mis en compression, de sorte à rapprocher l'une de l'autre les mâchoires de la pince de préhension, par enroulement d'un câble raccordé d'une part au coulisseau, d'autre part à un dispositif d'enroulement monté à l'autre extrémité du bras de retenue en passant à l'intérieur d'un tube constituant en partie le bras de retenue.

Ce système d'entraînement implique donc des frictions du câble sur certaines parties du pourtour intérieur du tube dans lequel le câble est disposé. Ces frictions entraînent non seulement une perte de transmission de puissance entre le dispositif d'enroulement et le coulisseau, mais induit également l'usure du câble. En outre, le dispositif d'enroulement doit comprendre, de sorte à éviter un desserrage spontané des mâchoires (desserrage d'autant plus spontané que le ressort hélicoïdal tend à éloigner les mâchoires l'une de l'autre) des moyens de blocage du dispositif d'enroulement. Il suit que le dispositif d'enroulement est de conception complexe et fragile.

Un objet de la présente invention est donc de proposer un porte-vélo permettant de résoudre tout ou partie des inconvénients susmentionnés.

### RÉSUMÉ DE L'INVENTION

Pour atteindre cet objectif, selon un mode de réalisation la présente invention prévoit un porte-vélo comprenant :
- un rail longitudinal sur lequel des roues du vélo sont destinées à être posées,
- un bras de retenue comprenant successivement une première portion sensiblement rectiligne, un coude et une deuxième portion sensiblement rectilignes, la première portion étant fixée transversalement au rail longitudinal et la deuxième portion formant une coulisse supportant une première mâchoire d'une pince de préhension, et
- un coulisseau monté mobile en translation dans la coulisse et supportant une seconde mâchoire de la pince de préhension, et
- un système d'entraînement du coulisseau dans la coulisse pour pouvoir rapprocher et éloigner successivement la seconde mâchoire de la première mâchoire de la pince de préhension ;
le bras de retenue, le coulisseau et le système d'entraînement étant configurés de sorte que les mâchoires de la pince de préhension puissent être serrées autour d'une partie d'un cadre du vélo notamment lorsque les roues du vélo sont posées sur le rail longitudinal.

Le porte-vélo est tel que le système d'entraînement comprend :
- un arbre d'entraînement s'étendant le long de la première portion du bras de retenue et monté libre en rotation autour de son axe,
- un pignon supporté par l'arbre d'entraînement et agencé au niveau du coude du bras de retenue, et
- une crémaillère supportée par le coulisseau et configurée pour s'étendre jusqu'au niveau du coude du bras de retenue pour y coopérer avec le pignon, de sorte qu'une rotation de l'arbre d'entraînement autour de son axe entraîne la rotation du pignon et, par engrenage du pignon avec la crémaillère, la translation du coulisseau dans la coulisse.

Le système d'entrainement met ainsi en oeuvre une liaison pignon-crémaillère, agencée en partie au niveau du coude du bras de retenue, ce qui permet d'obtenir une transmission de puissance satisfaisante.

De manière facultative, l'invention peut en outre présenter au moins l'une quelconque des caractéristiques suivantes, qui peuvent être mises en oeuvre de façon combinée ou alternative :
- la crémaillère comprend des dents situées en regard de l'arbre d'entraînement et le pignon comprend une denture en spirale, de sorte qu'au moins une dent de la crémaillère puisse coopérer avec au moins une spire de la denture du pignon. Ainsi, un choix idoine de démultiplication et de la nature des matériaux à base desquels la liaison pignon-crémaillère est réalisée permet d'assurer un couple de serrage suffisant pour la tenue du cadre du vélo transporté, ainsi que le non-desserrage spontané de la pince de préhension.
- le pignon présente une forme générale de cône, dont la base est fixée à une extrémité de l'arbre d'entraînement, sur la surface conique duquel la denture du pignon est configurée et dont l'angle α est sensiblement égal à l'angle formé entre l'axe de l'arbre d'entraînement et l'axe de translation du coulisseau. Ainsi, il est possible d'aligner les mâchoires de la pince de préhension au-dessus du rail longitudinal qui maintient les roues. En outre, cet agencement dégage de la place pour le coulissement de la crémaillère au niveau du (ou dans le) coude du bras de retenue. La denture du pignon peut plus particulièrement être en spirale d'Archimède. Ainsi, la distance entre les spires de la denture du pignon étant constante, la conception et la fabrication du pignon et de sa denture sont simples. En conséquence, la conception et la fabrication de la crémaillère sont elles aussi simples et la liaison pignon-crémaillère est d'une robustesse satisfaisante ;
- les dents de la crémaillère sont réparties linéairement selon un axe coupant l'axe de l'arbre d'entraînement, le pignon étant centré sur l'axe de l'arbre d'entraînement. Ainsi, les forces exercées par la crémaillère sur le pignon sont sensiblement parallèles au rayon de courbure local d'au moins une spire de la denture du pignon, ce qui renforce la qualité de non-desserrage spontané de la pince de préhension ;
- l'arbre d'entraînement supporte, à son extrémité opposée à celle supportant le pignon, une molette par l'intermédiaire d'un limiteur de couple. Ainsi, l'accouplement entre la molette et l'arbre d'entraînement comprend un système de protection limitant automatiquement le couple potentiellement transmis, à une valeur prédéterminée ;
- le coulisseau et la crémaillère forment une pièce d'un seul tenant et la deuxième portion du bras de retenue forme un tube de part et d'autre duquel ladite pièce d'un seul tenant s'étend et ladite pièce d'un seul tenant coulisse étroitement. Le bras de retenue et sa coopération avec le coulisseau et la crémaillère est ainsi d'une robustesse satisfaisante ;
- l'arbre d'entraînement forme un tube et la première portion du bras de retenue forme un tube dimensionné de sorte que l'arbre d'entraînement puisse y être logé étroitement. La coopération entre l'arbre d'entrainement et la première portion du bras de retenue est ainsi d'une robustesse satisfaisante et la rotation de l'arbre d'entrainement transmet quasiment sans perte sa puissance au pignon ;
- le coude et la première portion du bras de retenue sont liés entre eux par une liaison pivotante autour de l'axe de l'arbre d'entraînement de sorte à permettre au bras de retenue de pivoter au moins entre une position déployée dans laquelle il est destiné à retenir le vélo par le serrage d'une partie de son cadre par la pince de préhension et une position repliée dans laquelle il est sensiblement situé parallèlement au rail longitudinal. Ainsi, le porte-vélo est moins encombrant et plus facile à transporter lorsque le bras de retenue est dans sa position repliée ;
- le coude du bras de retenue forme un capot logeant le pignon et une partie au moins de la crémaillère du système d'entraînement. En outre, le coude du bras de retenue comprend une première extension dans laquelle la première portion du bras de retenue est emboîtée, de préférence en formant une liaison pivotante, et une seconde extension sur laquelle la deuxième portion du bras de retenue est emboîtée, de préférence en étant soudée à un pourtour intérieur de la deuxième portion du bras de retenue. Ladite seconde extension constitue le cas échéant une partie de la coulisse. Ainsi, le pignon et la crémaillère sont protégées d'éventuelles agressions issues de l'environnement extérieur, et notamment de tout risque d'encrassement. En outre, les liaisons mécaniques entre le coude et les première et deuxième portions du bras de retenue sont d'une robustesse satisfaisante ;
- le capot que forme le coude du bras de retenue comprend deux pièces fixées entre elles de façon amovible. Ainsi, l'assemblage, et éventuellement l'entretien et la réparation, du bras de retenue, et plus généralement du porte-vélo, sont facilités ; et
- la première portion du bras de retenue est fixée au rail longitudinal de sorte à être située à l'opposé d'une surface du rail longitudinal destinée à recevoir les roues du vélo. De la sorte, le bras de retenue ne gêne pas le roulement du vélo sur le rail longitudinal, ce roulement permettant le cas échéant d'amener une partie de cadre en une position lui permettant de venir en butée au-dessus de la première mâchoire de la pince de préhension.

De manière facultative, l'invention peut en outre présenter au moins l'une quelconque des caractéristiques suivantes :
- le porte-vélo comprend un système de fixation configuré pour permettre la fixation d'au moins le rail longitudinal à des barres de toit d'un véhicule automobile ;
- le porte vélo comprend un système de fixation configuré pour permettre la fixation d'au moins le rail longitudinal à un attelage d'un véhicule automobile ; et
- le porte vélo comprend un système de fixation configuré pour permettre sa suspension au coffre d'un véhicule automobile.

Les autres objets, caractéristiques et avantages de la présente invention apparaîtront à l'examen de la description suivante et des dessins d'accompagnement. Il est entendu que d'autres avantages peuvent être incorporés.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 montre une vue d'un ensemble comprenant un vélo et un porte-vélo selon un mode de réalisation de l'invention sur lequel le vélo est monté.
La FIGURE 2a est une vue en perspective du porte-vélo selon le mode de réalisation de l'invention illustré sur la FIGURE 1.
La FIGURE 2b illustre le détail de la partie A illustrée sur la FIGURE 2a du porte-vélo selon le mode de réalisation de l'invention illustré sur la FIGURE 1.
La FIGURE 3a est une vue d'un profil du porte-vélo selon le mode de réalisation de l'invention illustré sur la FIGURE 1.
La FIGURE 3b est une vue selon le plan de coupe B-B illustré sur la FIGURE 3a du porte-vélo selon le mode de réalisation de l'invention illustré sur la FIGURE 1.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

On entend par « système d'entraînement » un ensemble de dispositifs qui assurent l'action de solidariser le mouvement d'un organe commandé (par exemple une pince de préhension via un coulisseau) à celui qui commande (par exemple un axe d'entraînement via une molette).

On entend par « angle du cône » l'angle formé par l'axe de révolution et la génératrice du cône.

On entend par « spirale d'Archimède » une spirale dans laquelle la distance entre les spires est constante.

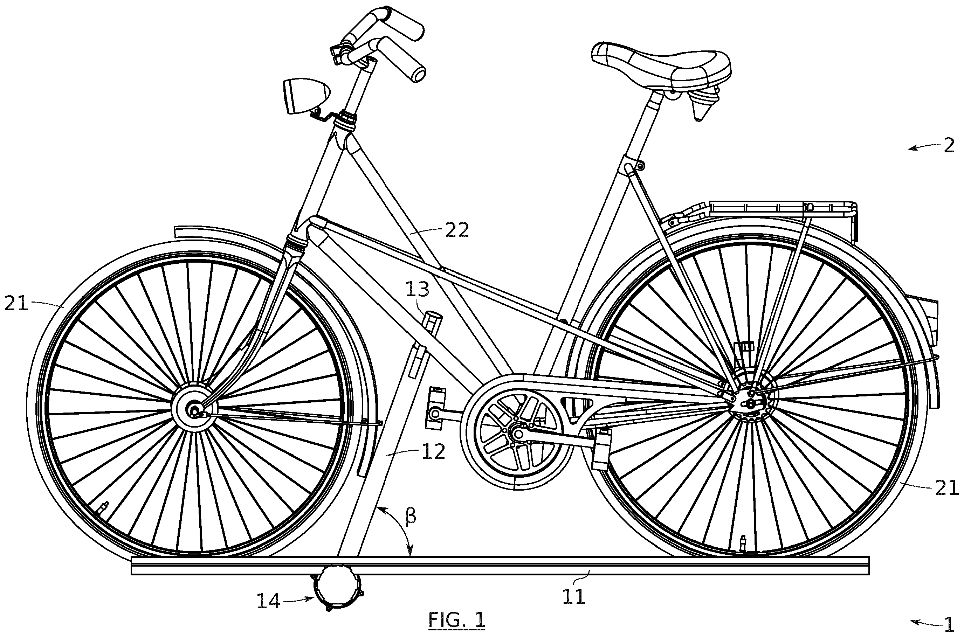

La figure 1 montre une vue d'un ensemble comprenant un porte-vélo 1 selon un mode de réalisation de l'invention et un vélo 2 monté sur le porte-vélo. Le porte-vélo 1 est par exemple pour l'essentiel fabriqué en un alliage métallique. D'autres matériaux de construction peuvent être envisagés pourvus qu'il permette au porte-vélo 1 de remplir sa fonction.

Les roues 21 du vélo 2 sont destinées à être posées sur un rail longitudinal 11 du porte-vélo 1. Le vélo 2 peut être déplacé le long du rail longitudinal 11, notamment de sorte à amener une partie du cadre 22 du vélo 2 en vis-à-vis de l'extrémité d'un bras de retenue 12 agencé pour interagir avec ladite partie de cadre 22 de sorte à maintenir le vélo 2 de préférence sensiblement à la verticale.

En référence à la figure 1, une partie du bras de retenue 12 peut être montée mobile en rotation par rapport au rail longitudinal 11 de sorte à pouvoir faire varier l'angle β que forme le bras de retenue 12 avec le rail longitudinal 11. Ainsi, le porte-vélo 1 est adaptable à différents types de vélo 2, et plus particulièrement à différents types de cadre 22. En outre, le bras de retenue 12 peut ainsi pivoter au moins entre une position déployée dans laquelle il est destiné à retenir le vélo 2 par son interaction avec une partie de son cadre 22 et une position repliée dans laquelle il est sensiblement situé parallèlement au rail longitudinal 11. Ainsi, le porte-vélo peut être rendu moins encombrant et plus facile à transporter lorsque le bras de retenue est dans sa position repliée.

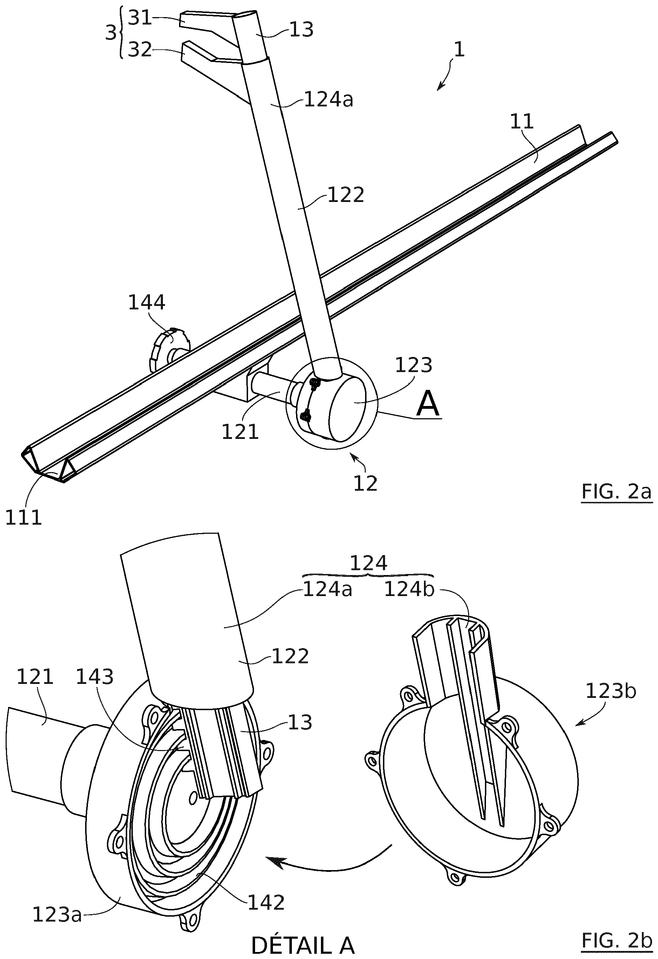

Comme illustré sur la figure 2a, le rail longitudinal 11 peut comprendre un profilé présentant une surface 111 sensiblement plane destinée à recevoir les roues 21 du vélo 2. De part et d'autre de cette surface 111, le rail peut comprendre des parois, s'étendant sensiblement vers le haut, destinées à limiter le mouvement, et en particulier le ripement, du vélo 2, et en particulier de ses roues 21, transversalement au rail longitudinal 11.

Le bras de retenue 12 comprend une première portion 121 fixée au rail longitudinal 11. La première portion 121 peut être sensiblement longiligne. De préférence, la première portion 121 s'étend transversalement de part et d'autre du rail longitudinal 11.

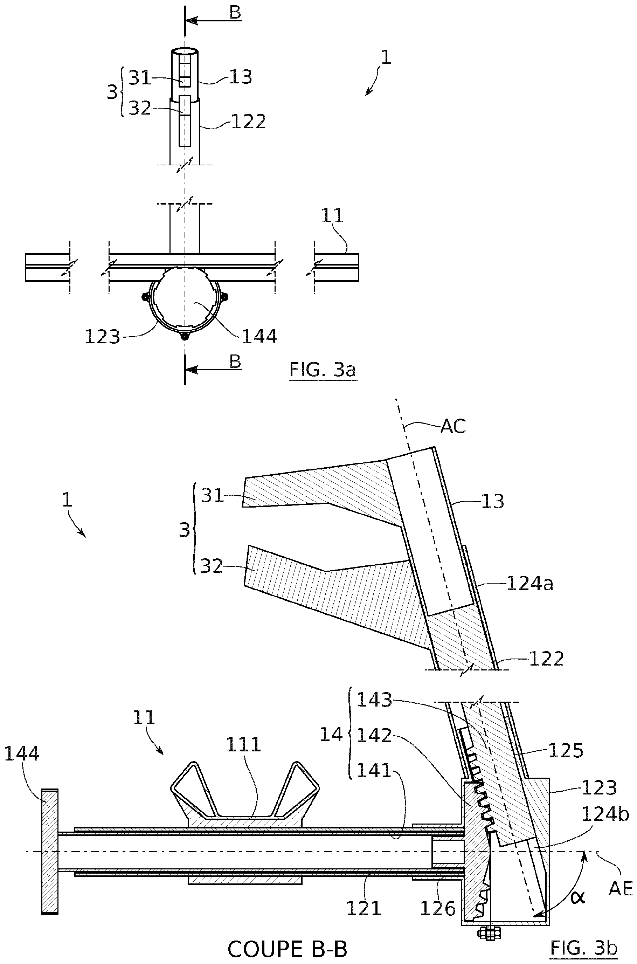

Comme illustré sur les figures 2a et 3b, la première portion 121 du bras de retenue peut être fixée, par exemple soudée, dans un boîtier de fixation lui-même solidaire, ou faisant partie, du rail longitudinal 11. Ceci n'est pas limitatif, et par exemple la première portion 121 du bras de retenue 12 pourrait être soudée directement à la surface du rail longitudinal 11 opposée à sa surface 111. Cette disposition particulière de la première portion 121 du bras de retenue 12 par rapport au rail longitudinal 11 n'est pas non plus limitative, et la première portion 121 du bras de retenue 12 pourrait être fixée au rail longitudinal par le dessus ou à travers le profilé du rail longitudinal. Toutefois, cette disposition alternative pourrait limiter, ou du moins contraindre, le déplacement du vélo 2 sur le rail longitudinal 11, et semble moins esthétique.

Comme illustré en particulier sur la figure 3b, le bras de retenue 12 comprend en outre un coude 123 et une deuxième portion 122. La deuxième portion 122 peut être sensiblement longiligne de sorte que le coude 123 permet de faire la jonction entre les première et deuxième portions 121, 122 du bras de retenue 12 en formant entre leurs axes d'extension principale un angle α déterminé. De préférence, cet angle α est inférieur à 90°.

Selon le mode de réalisation illustré sur les figures, les première et deuxième portions 121, 122 du bras de retenue 12 prennent essentiellement la forme de tubes de section cylindrique. Toutefois, cet exemple n'est nullement limitatif. La section des tubes pourrait être carrée ou de tout autre forme. En outre, les première et deuxième portions 121, 122 du bras de retenue 12 pourraient être pleines. Toutefois, cette dernière possibilité nécessiterait d'agencer certains composants du système d'entraînement 14 à la périphérie du bras de retenue 12 ; or il est préférable de profiter du creux des tubes que forment les première et deuxième portions 121, 122 du bras de retenue 12 pour y loger le système d'entrainement 14 de la façon décrite plus bas.

De la même façon, le coude 123 tel qu'illustré sur les figures forme essentiellement une boîte ou un capot creux dans lequel il est possible d'agencer des composants du système d'entrainement 14. Toutefois, le coude 123 du bras de retenue 12 pourrait être une pièce de jonction pleine, obligeant d'agencer certains composants du système d'entrainement 14 à sa périphérie.

Selon le mode de réalisation illustré sur les figures, le coude 123 du bras de retenue 12 comprend une première extension 125 dans laquelle la première portion 121 du bras de retenue 12 est emboîtée, de préférence en formant une liaison pivotante. Le coude 123 du bras de retenue 12 comprend en outre une seconde extension 126 sur laquelle la deuxième portion 122 du bras de retenue 12 est emboîtée, de préférence en étant soudée à un pourtour intérieur de la deuxième portion 122 du bras de retenue 12. Ladite seconde extension 126 peut le cas échéant constituer une partie 124b d'une coulisse 124.

En référence à la figure 2b, le coude 123 du bras de retenue 12 peut comprendre deux pièces 123a, 123b fixées entre elles de façon amovible. Ainsi, l'assemblage, et éventuellement l'entretien et la réparation, du bras de retenue 12, et plus généralement du porte-vélo 1, sont facilités.

Le bras de retenue 12 comprend une extrémité distale et une extrémité proximale. L'extrémité distale comprend l'extrémité de la deuxième portion 122 qui est opposée à celle jointe au coude 123. L'extrémité proximale est située à l'opposé de l'extrémité distale de l'autre côté du coude 123, de sorte que l'extrémité proximale du bras de retenue 12 comprend l'extrémité de la première portion 121 du bras de retenue 12 opposée à celle jointe au coude 123. L'extrémité proximale du bras de retenue 12 comprend un organe de commande, tel qu'une molette 144, configuré pour pouvoir être manipulé par un utilisateur de sorte à commander le mouvement d'un organe commandé, tel qu'une pince de préhension 3, agencé au niveau de l'extrémité distale du bras de retenue 12. Ainsi, la molette 144 est située d'un côté du rail longitudinal 11 vers lequel l'utilisateur se situe pour pouvoir, dans un premier temps, amener le vélo 2 sur le rail longitudinal 11, sans être gêné par la deuxième portion 122 du bras de retenue 12, puis pour pouvoir, dans un deuxième temps, tourner la molette 144, serrer la pince de préhension 13 sur une partie du cadre 22 du vélo 2 et finaliser ainsi la fixation du vélo 2 sur le porte-vélo 1.

Plus particulièrement, l'utilisateur en tournant la molette 144 dans un sens, puis dans l'autre, doit pouvoir commander successivement le serrage, puis le desserrage, de mâchoires 31, 32 de la pince de préhension 3. Une première mâchoire 31 peut être supportée par la deuxième portion 122 du bras de retenue 12. La deuxième mâchoire 32 de la pince peut être solidaire d'un coulisseau 13 configuré pour coulisser dans une coulisse 124. Comme introduit plus haut, cette coulisse 124 peut être formée en partie 124a par la deuxième portion 122 du bras de retenue 12.

En alternative, la coulisse 124 pourrait être agencée sur le pourtour de la deuxième portion 122 du bras de retenue 12 ; toutefois, dès lors que cette deuxième portion est un tube, il semble préférable que le coulisseau 13 soit configuré pour coulisser dans ce tube. Le coulisseau 13 est de préférence fixe en rotation dans la coulisse 124 de sorte que les première et seconde mâchoires 31, 32 de la pince de préhension 3 soient constamment maintenues en regard l'une de l'autre. Les mâchoires 31, 32 sont en outre de préférence orientées pour pointer vers le côté du rail longitudinal 11 où est destiné à se trouver l'utilisateur de sorte que la disposition de la partie de cadre 22 destinée à être serrée dans la pince de préhension 3 puisse être aisée, ergonomique et visuellement contrôlée.

Le système d'entraînement 14 va maintenant être décrit en détails notamment en référence aux figures 2b et 3b.

Le système d'entraînement 14 comprend un arbre d'entraînement 141, un pignon 142 et une crémaillère 143. Au moins l'une de ces pièces, de préférence chacune d'entre elles, est réalisée en PA66-GF30. Ce matériau a en effet un comportement particulièrement adapté pour réaliser la liaison pignon-crémaillère du porte-vélo selon un mode de réalisation de l'invention. Au moins l'une de ces pièces, de préférence chacune d'entre elles, est réalisée par frittage de poudre.

L'arbre d'entraînement 141 s'étend le long de la première portion 121 du bras de retenue 12 et est monté libre en rotation autour de son axe (AE). Plus particulièrement, l'arbre d'entraînement 141 peut être agencé et monté libre en rotation à l'intérieur du tube que forme la première portion 121.

Comme illustré sur la figure 3b, l'arbre d'entraînement 141 peut former un tube et le tube formé par la première portion 121 du bras de retenue 12 peut être dimensionné de sorte que l'arbre d'entraînement 141 puisse y être logé étroitement. La coopération entre l'arbre d'entrainement 141 et la première portion 121 du bras de retenue 12 est ainsi d'une robustesse satisfaisante et ne présente pas de jeu. La rotation de l'arbre d'entrainement 141 n'induit quasiment aucune torsion de l'axe d'entrainement 141. Sa puissance est transmise quasiment sans perte au pignon 142. Ce mode de réalisation n'est pas limitatif de l'invention et l'arbre d'entrainement 141 pourrait comprendre une simple tige par exemple métallique.

Le pignon 142 est supporté par l'arbre d'entraînement 141 et agencé au niveau du coude 123 du bras de retenue 12. Plus particulièrement, le pignon 142 est de préférence agencé dans le capot que forme le coude 123. Le pignon 142 est ainsi protégé d'éventuelles agressions issues de l'environnement extérieur, et notamment de tout risque d'encrassement.

La crémaillère 143 est supportée par le coulisseau 13 et configurée pour s'étendre jusqu'au niveau du coude 123 du bras de retenue 12, de préférence jusqu'à l'intérieur du capot que forme le coude 123, pour y coopérer avec le pignon 142. La crémaillère 143 est ainsi protégée d'éventuelles agressions issues de l'environnement extérieur, et notamment de tout risque d'encrassement. Le coulisseau 13 et la crémaillère 143 peuvent former une pièce d'un seul tenant s'étendant alors de part et d'autre du tube que forme la deuxième portion 122 du bras de retenue 12 et y coulisse de préférence étroitement. Pour autant, ladite pièce d'un seul tenant peut présenter une section transversale variable en forme et dimensions. Par exemple, le coulisseau 13 présente une section circulaire dans sa partie haute et une section de rail de coulissement (tel qu'illustré sur la figure 2b) dans sa partie basse.

Avec un tel système d'entrainement 14, une rotation de l'arbre d'entraînement 141 autour de son axe (AE) entraîne la rotation du pignon 142 et, par engrenage du pignon 142 avec la crémaillère 143, la translation du coulisseau 13 dans la coulisse 124. Par voie, la deuxième mâchoire 32 de la pince de préhension 3 se rapproche ou s'éloigne de la première mâchoire 31 selon le sens dans lequel l'utilisateur tourne la molette 144.

Comme illustré sur la figure 3b, l'extrémité de l'arbre d'entraînement 141 supportant le pignon 142 peut affleurer le pourtour intérieur du capot que forme le coude 123, de sorte que le pignon 142 soit en appui sur une face intérieure du capot, de sorte qu'aucun mouvement significatif de recul du pignon 142 par rapport à la crémaillère 143 ne soit autorisé. En outre, comme illustré sur les figures 2b et 3b, le coulisseau 13 peut être agencé dans une deuxième partie 124b de la coulisse 124 formée en partie dans l'extension 126 du capot que forme le coude 123 et s'étendant au-delà dans le capot, non seulement de sorte à guider le coulissement de la crémaillère 143, mais également de sorte qu'aucun mouvement significatif de recul du coulisseau 13 et de la crémaillère 143 ne soit autorisé. On s'assure ainsi que les dents de la crémaillère 143 soient contraintes à rester engagées dans la denture du pignon 142. On s'assure plus particulièrement que les dents de la crémaillère 143 ne puissent pas être désengagées de la denture du pignon 142 autrement que par la séparation des pièces 123a et 123b du capot que forme le coude 123 ou par le retrait du coulisseau 13 depuis la coulisse 124 par translation selon son axe de coulissement (AC). Notons, en référence à la figure 2b, que la deuxième partie 124b de la coulisse 124 comprend deux nervures s'étendant depuis le pourtour intérieur de la pièce 123b du capot que forme le coude 123 et le pourtour intérieur de la pièce 123b du capot que forme le coude 123 situé entre les deux nervures.

Le système d'entrainement 14 met ainsi en oeuvre une liaison pignon-crémaillère, agencée en partie au niveau du coude 123 du bras de retenue 12. Ce système d'entraînement 14 permet de s'affranchir de toute déformation élastique et de maîtriser les frictions et l'usure que ces frictions occasionnent. Dès lors, le porte-vélo 1 équipé de ce système d'entraînement 14 permet d'obtenir une transmission de puissance satisfaisante au moins en termes de contrôle, d'efficacité et de durabilité, notamment entre l'arbre d'entraînement 141 et les mâchoires 31, 32 de la pince de préhension 3.

Selon une caractéristique additionnelle non illustrée sur les figures, l'arbre d'entraînement 141 supporte la molette 144, à son extrémité opposée à celle supportant le pignon 142, par l'intermédiaire d'un limiteur de couple. Ainsi, l'accouplement entre la molette 144 et l'arbre d'entraînement 141 comprend un système de protection limitant automatiquement le couple potentiellement transmis par la molette 144 à l'arbre d'entraînement, à une valeur prédéterminée. L'on évite ainsi tout risque d'endommagement du porte-vélo 1 et du vélo 2 qui serait lié à l'application d'une force trop grande sur la molette 144 par l'utilisateur, notamment lorsque le vélo 2 comprend un cadre en carbone ou en aluminium qui pourrait s'écraser sous l'effort de serrage.

D'autres caractéristiques, additionnelles et facultatives, du système d'entraînement 14 sont détaillées ci-après.

Selon le mode de réalisation illustré sur les figures 2b et 3b, la crémaillère 143 comprend des dents situées en regard de l'arbre d'entraînement 141. Plus particulièrement, chaque dent de la crémaillère 143 a une hauteur présentant une composante non nulle lorsque projetée sur l'axe (AE) de l'arbre d'entraînement 141. Autrement dit, les dents de la crémaillère 143 ne sont pas disposées perpendiculairement à l'arbre d'entrainement 141. De façon corrélée, le pignon 142 comprend une denture en spirale s'étendant selon l'axe (AE) de l'arbre d'entraînement 141. De la sorte, les dents de la crémaillère 143 font face à la denture du pignon 142 ; au moins une dent de la crémaillère 143 peut coopérer avec au moins une spire de la denture du pignon 142. De préférence, chaque spire de la denture du pignon 142 est engagée entre deux dents de la crémaillère 143, lorsque le coulisseau 13 occupe une position de coulissement comprise entre une position de déploiement maximum et une position de reploiement maximum.

Ainsi, un choix idoine de démultiplication, en fonction de la distance entre les spires de la denture du pignon 142 et du dimensionnement des dents de la crémaillère 143, ainsi que de leurs éventuelles évolutions, permet d'assurer un couple de serrage suffisant, constant ou variable, pour la tenue du cadre 22 du vélo 2 transporté, ainsi que le non-desserrage spontané de la pince de préhension 3. On peut alternativement ou en complément assurer un blocage du système d'entraînement 14 par un autre moyen pour éviter le desserrage. Notamment un tel autre moyen peut permettre à la fois de protéger le système d'entraînement 14 et d'assurer un verrouillage extérieur de sa rotation. La nature des matériaux à base desquels la liaison pignon-crémaillère est réalisée peut également être prise en compte pour s'assurer de la suffisance du couple de serrage obtenu. En ce sens, l'utilisation de PA66-GF30 peut être recommandée.

Comme évoqué plus haut, le coulissement du coulisseau 13 peut en effet être contraint entre une position de déploiement maximum et une position de reploiement maximum, par exemple par un jeu de butées (non représentées). Pour ce faire, le coulisseau 13 peut par exemple comprendre un retrait de matière (non représenté) formant dans sa longueur une rainure configurée pour coopérer avec une butée (non représentée) s'étendant à l'intérieur de la coulisse 124 au moins depuis son pourtour intérieur; la rainure notamment a alors une longueur *ad hoc* pour empêcher le coulissement du coulisseau 13 dans la coulisse 124 au-delà de sa position de déploiement maximum et/ou au-delà de sa position de reploiement maximum. Notons que cette configuration permet dans le même temps d'empêcher la rotation du coulisseau 13 dans la coulisse 124, notamment lorsque le coulisseau 13 et la coulisse 124 consistent essentiellement en deux tubes concentriques (Il est entendu que cette fonction peut être obtenue d'autres manières non détaillées ici mais jugées relever des compétences ordinaires d'un homme du métier). Eventuellement, la butée peut être formée par l'extrémité de l'extension 126 du capot que forme le coude 123. En alternative, la butée peut être escamotable, par exemple depuis l'extérieur de la coulisse 124, pour permettre le retrait complet du coulisseau 13 depuis la coulisse 124. En alternative ou en combinaison, et comme illustré sur la figure 3b, une partie du pourtour intérieur du capot que forme le coude 123 peut être configurée de sorte à former la butée empêchant le coulissement du coulisseau 13 au-delà de sa position de reploiement maximum. En alternative ou en combinaison, lorsque le coulisseau 13 est dans sa position de reploiement maximum, les mâchoires 31, 32 de la pince de préhension 3 sont en butée l'une contre l'autre.

Tel que particulièrement bien illustré sur la figure 3b, le pignon 142 peut en outre présenter une forme générale de cône. La base du cône est alors fixée à une extrémité de l'arbre d'entraînement 141. La denture du pignon 142 est configurée sur la surface conique du cône. L'angle α du cône est de préférence sensiblement égal à l'angle formé entre l'axe (AE) de l'arbre d'entraînement 141 et l'axe AC de translation du coulisseau 13. Ainsi, il est possible d'aligner les mâchoires 31, 32 de la pince de préhension 3 au-dessus du rail longitudinal 11 qui maintient les roues 21 du vélo 2, de sorte que le bras de retenue 12 maintienne le vélo sensiblement à la verticale. En outre, cet agencement procure un dégagement pour permettre le coulissement du coulisseau 13 au niveau du (ou dans le) coude 123 du bras de retenue 12, et notamment sous l'axe (AE) de l'arbre d'entraînement 141 tel qu'illustré sur la figure 3b. En particulier, les dents de la crémaillère ne mettent ainsi pas en prises les spires de la denture du pignon 142 se trouvant sous l'axe (AE) de l'arbre d'entraînement 141.

La denture du pignon 142 peut plus particulièrement être en spirale d'Archimède. Ainsi, la distance entre les spires de la denture du pignon 142 étant constante, la conception et la fabrication du pignon 142 et de sa denture sont simples. En conséquence, la conception et la fabrication de la crémaillère 143 sont elles aussi simples et la liaison pignon-crémaillère est d'une robustesse satisfaisante. En outre, une rotation d'un angle donné de l'arbre d'entraînement 141 induit alors un coulissement d'une longueur invariable du coulisseau 13.

Les dents de la crémaillère 143 peuvent être réparties linéairement selon un axe coupant l'axe (AE) de l'arbre d'entraînement 141 ; le pignon 142 étant centré sur l'axe (AE) de l'arbre d'entraînement 141. Ainsi, les forces exercées par la crémaillère 143 sur le pignon 142 sont sensiblement parallèles au rayon de courbure local des spires de la denture du pignon 142, c'est-à-dire qu'elles n'ont pas de composantes tangentielles ou du moins que celles-ci sont négligeables. Ceci permet de renforcer la qualité de non-desserrage spontané de la pince de préhension.

L'invention n'est pas limitée aux modes de réalisations précédemment décrits et s'étend à tous les modes de réalisation couverts par les revendications.

Par exemple, selon un mode de réalisation différent de celui illustré sur figures, et pour autant envisagé, les dents de la crémaillère sont agencées perpendiculairement à l'axe de l'arbre d'entrainement 141 et le pignon 142 comprend une roue dentée.

## Revendications

1. Porte-vélo (1) comprenant :
- un rail longitudinal (11) sur lequel des roues (21) du vélo (2) sont destinées à être posées,
- un bras de retenue (12) comprenant successivement une première portion (121), un coude (123) et une deuxième portion (122), la première portion (121) étant fixée transversalement au rail longitudinal (11) et la deuxième portion (122) formant une coulisse (124) supportant une première mâchoire (31) d'une pince de préhension (3), et
- un coulisseau (13) monté mobile en translation dans la coulisse (124) et supportant une seconde mâchoire (32) de la pince de préhension (3), et
- un système d'entraînement (14) du coulisseau (13) dans la coulisse (124) pour pouvoir rapprocher et éloigner successivement la seconde mâchoire (32) de la première mâchoire (31) de la pince de préhension (3),
le bras de retenue (12), le coulisseau (13) et le système d'entraînement (14) étant configurés de sorte que les mâchoires (31, 32) de la pince de préhension (3) puissent être serrées autour d'une partie d'un cadre (22) du vélo (2),
**caractérisé en ce que** le système d'entraînement (14) comprend :
- un arbre d'entraînement (141) s'étendant le long de la première portion (121) du bras de retenue (12) et monté libre en rotation autour de son axe (AE),
- un pignon (142) supporté par l'arbre d'entraînement (141) et agencé au niveau du coude (123) du bras de retenue (12), et
- une crémaillère (143) supportée par le coulisseau (13) et configurée pour s'étendre jusqu'au niveau du coude (123) du bras de retenue (12) pour y coopérer avec le pignon (142),
de sorte qu'une rotation de l'arbre d'entraînement (141) autour de son axe (AE) entraîne la rotation du pignon (142) et, par engrenage du pignon (142) avec la crémaillère (143), la translation du coulisseau (13) dans la coulisse (124).

2. Porte-vélo (1) selon la revendication précédente, dans lequel la crémaillère (143) comprend des dents situées en regard de l'arbre d'entraînement (141) et dans lequel le pignon (142) comprend une denture en spirale, de sorte qu'au moins une dent de la crémaillère (143) puisse coopérer avec au moins une spire de la denture du pignon (142).

3. Porte-vélo (1) selon la revendication précédente, dans lequel le pignon (142) présente une forme générale de cône, dont la base est fixée à une extrémité de l'arbre d'entraînement (141), sur la surface conique duquel la denture du pignon (142) est configurée et dont l'angle α est sensiblement égal à l'angle formé entre l'axe (AE) de l'arbre d'entraînement (141) et l'axe (AC) de translation du coulisseau (13).

4. Porte-vélo (1) selon l'une quelconque des deux revendications précédentes, dans lequel la denture du pignon (142) est en spirale d'Archimède.

5. Porte-vélo (1) selon l'une quelconque des trois revendications précédentes, dans lequel les dents de la crémaillère (143) sont réparties linéairement selon un axe (AC) coupant l'axe (AE) de l'arbre d'entraînement (141).

6. Porte-vélo (1) selon l'une quelconque des revendications précédentes, dans lequel l'arbre d'entraînement (141) supporte, à son extrémité opposée à celle supportant le pignon (142), une molette (144) par l'intermédiaire d'un limiteur de couple.

7. Porte-vélo (1) selon l'une quelconque des revendications précédentes, dans lequel le coulisseau (13) et la crémaillère (143) forment une pièce d'un seul tenant et dans lequel la deuxième portion (122) du bras de retenue (12) forme un tube de part et d'autre duquel ladite pièce d'un seul tenant s'étend et dans lequel ladite pièce d'un seul tenant coulisse étroitement.

8. Porte-vélo (1) selon l'une quelconque des revendications précédentes, dans lequel l'arbre d'entraînement (141) forme un tube et la première portion (121) du bras de retenue (12) forme un tube dimensionné de sorte que l'arbre d'entraînement (141) puisse y être logé étroitement.

9. Porte-vélo (1) selon l'une quelconque des revendications précédentes, dans lequel le coude (123) et la première portion (121) du bras de retenue (12) sont liées entre elles par une liaison pivotante autour de l'axe (AE) de l'arbre d'entraînement (141) de sorte à permettre au bras de retenue (12) de pivoter au moins entre une position déployée dans laquelle il est destiné à retenir le vélo par le serrage d'une partie de son cadre (22) par la pince de préhension (3) et une position repliée dans laquelle il est sensiblement situé parallèlement au rail longitudinal (11).

10. Porte-vélo (1) selon l'une quelconque des revendications précédentes, dans lequel le coude (123) du bras de retenue (12) forme un capot logeant le pignon (142) et une partie au moins de la crémaillère (143) du système d'entraînement (14) et comprend une première extension (125) dans laquelle la première portion (121) du bras de retenue (12) est emboîtée, de préférence en formant une liaison pivotante, et une seconde extension (126) sur laquelle la deuxième portion (122) du bras de retenue (12) est emboîtée, de préférence en étant soudée à un pourtour intérieur de la deuxième portion (122) du bras de retenue (12), ladite seconde extension (126) constituant le cas échéant une partie de la coulisse (124).

11. Porte-vélo (1) selon la revendication précédente, dans lequel le capot que forme le coude (123) du bras de retenue (12) comprend deux pièces (123a, 123b) fixées entre elles de façon amovible.

12. Porte-vélo (1) selon l'une quelconque des revendications précédentes, dans lequel la première portion (121) du bras de retenue (12) est fixée au rail longitudinal (11) de sorte à être située à l'opposé d'une surface (111) du rail longitudinal (11) destinée à recevoir les roues (21) du vélo (2).

## Patentansprüche

1. Fahrradträger (1), umfassend:
- eine Längsschiene (11), auf der vorgesehen ist, dass Räder (21) des Fahrrads (2) gestellt werden,
- einen Haltearm (12), umfassend aufeinanderfolgend einen ersten Abschnitt (121), ein Knie (123) und einen zweiten Abschnitt (122), wobei der erste Abschnitt (121) quer auf die Längsschiene (11) fixiert ist, und wobei der zweite Abschnitt (122) eine Führung (124) bildet, der eine erste Backe (31) einer Greifzange (3) trägt, und
- einen Schlitten (13), der beweglich in Translation in der Führung (124) montiert ist der eine zweite Backe (32) einer Greifzange (3) trägt, und
- ein Antriebssystem (14) des Schlittens (13) in der Führung (124), um aufeinanderfolgend die zweite Backe (32) an die erste Backe (31) der Greifzange (3) annähern und von dieser entfernen zu können,
wobei der Haltearm (12), der Schlitten (13) und das Antriebssystem (14) derart konfiguriert sind, dass die Backen (31, 32) der Greifzange (3) um einen Teil eines Rahmens (22) des Fahrrads (2) gespannt werden können,
**dadurch gekennzeichnet, dass** das Antriebssystem (14) Folgendes umfasst:
- eine Antriebswelle (141), die sich entlang des ersten Abschnitts (121) des Haltearms (12) erstreckt und frei in Rotation um seine Achse (AE) montiert ist,
- ein Ritzel (142), das von der Antriebswelle (141) getragen wird und auf der Ebene des Knies (123) des Haltearms (12) angeordnet ist, und
- eine Zahnstange (143), die vom Schlitten (13) getragen wird und konfiguriert ist, um sich bis zur Ebene des Knies (123) des Haltearms (12) zu erstrecken, um dort mit dem Ritzel (142) zusammenzuarbeiten,
so dass eine Rotation der Antriebswelle (141) um ihre Achse (AE) die Rotationdes Ritzels (142) und, durch Eingriff des Ritzels (142) mit der Zahnstange (143), die Translation des Schlittens (13) in der Führung (124) verursacht.

2. Fahrradträger (1) nach dem vorhergehenden Anspruch, wobei die Zahnstange (143) Zähne umfasst, die sich gegenüber der Antriebswelle (141) befinden, und wobei das Ritzel (142) eine spiralförmige Zähnung umfasst, so dass mindestens ein Zahn der Zahnstange (143) mit mindestens einer Windung der Zähnung des Ritzels (142) zusammenarbeiten kann.

3. Fahrradträger (1) nach dem vorhergehenden Anspruch, wobei das Ritzel (142) eine allgemeine Form eines Kegels aufweist, dessen Base an ein Ende des Antriebswelle (141) fixiert ist, auf dessen konischer Fläche die Zähnung des Ritzels (142) konfiguriert ist, und dessen Winkel im Wesentlichen gleich dem Winkel ist, der zwischen der Achse (AE) der Antriebswelle (141) und der Translationsachse (AC) des Schlittens (13) gebildet ist.

4. Fahrradträger (1) nach einem der zwei vorhergehenden Ansprüche, wobei die Zähnung des Ritzels (142) eine archimedische Spirale ist.

5. Fahrradträger (1) nach einem der drei vorhergehenden Ansprüche, wobei die Zähne der Zahnstange (143) linear gemäß einer Achse (AC) verteilt sind, die die Achse (AE) des Antriebswelle (141) schneidet.

6. Fahrradträger (1) nach einem der vorhergehenden Ansprüche, wobei die Antriebswelle (141) an ihrem Ende gegenüber demjenigen, das das Ritzel (142) trägt, ein Rändel (144) mit Hilfe eines Drehmomentbegrenzers trägt.

7. Fahrradträger (1) nach einem der vorhergehenden Ansprüche, wobei der Schlitten (13) und die Zahnstange (143) ein einziges Stück bilden, und wobei der zweite Abschnitt (122) des Haltearms (12) ein Rohr bildet, auf dessen beiden Seiten sich das einzige Stück erstreckt, und wobei das einzige Stück eng gleitet.

8. Fahrradträger (1) nach einem der vorhergehenden Ansprüche, wobei die Antriebswelle (141) ein Rohr bildet und der erste Abschnitt (121) des Haltearms (12) ein Rohr bildet, das derart abgemessen ist, dass die Antriebswelle (141) eng darin aufgenommen werden kann.

9. Fahrradträger (1) nach einem der vorhergehenden Ansprüche, wobei das Knie (123) und der erste Abschnitt (121) des Haltearms (12) miteinander durch eine schwenkende Verbindung um die Achse (AE) der Antriebswelle (141) verbunden sind, um dem Haltearm (12) zu ermöglichen, mindestens zwischen einer ausgezogenen Position, bei der er ausgelegt ist, ein Fahrrad durch die Spannung eines Teils seines Rahmens (22) durch die Greifzange (3) zu halten, und einer zurückgezogenen Position zu schwenken, in der er sich im Wesentlichen parallel zur Längsschiene (11) befindet.

10. Fahrradträger (1) nach einem der vorhergehenden Ansprüche, wobei das Knie (123) des Haltearms (12) eine Kappe, die das Ritzel (142) aufnimmt, und einen Teil mindestens der Zahnstange (143) des Antriebssystems (14) bildet und eine erste Erweiterung (125) umfasst, in der der erste Abschnitt (121) des Haltearms (12) eingefügt ist, vorzugsweise, indem sie eine Schwenkverbindung bildet, und eine zweite Erweiterung (126), auf der ein zweiter Abschnitt (122) des Haltearms (12) eingefügt ist, vorzugsweise indem sie an einen inneren Umfang des zweiten Abschnitts (122) des Haltearms (12) geschweißt ist, wobei die zweite Erweiterung (126) gegebenenfalls einen Teil der Führung (124) darstellt.

11. Fahrradträger (1) nach dem vorhergehenden Anspruch, wobei die Kappe, die das Knie (123) des Haltearms (12) bildet, zwei Stücke (123a, 123b) umfasst, die aneinander auf abnehmbare Weise fixiert sind.

12. Fahrradträger (1) nach einem der vorhergehenden Ansprüche, wobei der erste Abschnitt (121) des Haltearms (12) an die Längsschiene (11) fixiert ist, um sich gegenüber einer Fläche (111) der Längsschiene (11) zu befinden, die ausgelegt ist, um die Räder (21) des Fahrrads (2) aufzunehmen.

## Claims

1. Bike rack (1) comprising:
- a longitudinal rail (11) on which wheels (21) of the bike (2) are intended to be placed,
- a retaining arm (12) comprising successively a first portion (121), a bend (123) and a second portion (122), the first portion (121) being secured transversally to the longitudinal rail (11) and the second portion (122) forming a slider (124) supporting a first jaw (31) of a gripper (3), and
- a slide (13) mounted mobile in translation in the slider (124) and supporting a second jaw (32) of the gripper (3), and
- a system for driving (14) the slide (13) in the slider (124) to be able to move successively the second jaw (32) closer and farther away from the first jaw (31) of the gripper (3),
the retaining arm (12), the slide (13) and the drive system (14) being configured such that the jaws (31, 32) of the gripper (3) can be clamped around a portion of a frame (22) of the bike (2),
**characterised in that** the drive system (14) comprises:
- a drive shaft (141) extending along the first portion (121) of the retaining arm (12) and mounted free in rotation about the axis (AE) thereof,
- a pinion (142) supported by the drive shaft (141) and arranged at the level of the bend (123) of the retaining arm (12), and
- a rack (143) supported by the slide (13) and configured to extend up to the level of the bend (123) of the retaining arm (12) to be engaged there with the pinion (142),
such that a rotation of the drive shaft (141) about the axis (AE) thereof drives the rotation of the pinion (142) and, by gearing the pinion (142) with the rack (143), the translation of the slide (13) in the slider (124).

2. Bike rack (1) according to the preceding claim, wherein the rack (143) comprises teeth located facing the drive shaft (141) and wherein the pinion (142) comprises a spiral-shaped tooth, such that at last one tooth of the rack (143) can engage with at least one spire of the gearing of the pinion (142).

3. Bike rack (1) according to the preceding claim, wherein the pinion (142) has a general cone shape, of which the base is secured to an end of the drive shaft (141), on the conic surface of which the gearing of the pinion (142) is configured and of which the angle α is substantially equal to the angle formed between the axis (AE) of the drive shaft (141) and the axis (AC) of translation of the slide (13).

4. Bike rack (1) according to any one of the two preceding claims, wherein the gearing of the pinion (142) is Archimedes spiral-shaped.

5. Bike rack (1) according to any one of the three preceding claims, wherein the teeth of the rack (143) are distributed linearly about an axis (AC) cutting the axis (AE) of the drive shaft (141).

6. Bike rack (1) according to any one of the preceding claims, wherein the drive shaft (141) supports, at the end thereof opposite that supporting the pinion (142), a wheel (144) by way of a torque limiter.

7. Bike rack (1) according to any one of the preceding claims, wherein the slide (13) and the rack (143) form a part of one single holder and wherein the second portion (122) of the retaining arm (12) forms a tube on either side of which said part of one single holder extends, and wherein said part of one single holder closely slides.

8. Bike rack (1) according to any one of the preceding claims, wherein the drive shaft (141) forms a tube and the first portion (121) of the retaining arm (12) forms a sized tube, such that the drive shaft (141) can be closely housed there.

9. Bike rack (1) according to any one of the preceding claims, wherein the bend (123) and the first portion (121) of the retaining arm (12) are connected to one another by a connection pivoting about the axis (AE) of the drive shaft (141) so as to make it possible for the retaining arm (12) to pivot at least between one deployed position, wherein it is intended to retain the bike by clamping a part of the frame (22) thereof by the gripper (3) and a folded position, wherein it is substantially located parallel to the longitudinal rail (11).

10. Bike rack (1) according to any one of the preceding claims, wherein the bend (123) of the retaining arm (12) forms a cap housing the pinion (142) and one portion at least of the rack (143) of the drive system (14) and comprises a first extension (125), wherein the first portion (121) of the retaining arm (12) is slotted, preferably by forming a pivoting connection, and a second extension (126) on which the second portion (122) of the retaining arm (12) is slotted, preferably by being welded to a perimeter inside the second portion (122) of the retaining arm (12), said second extension (126) constituting, if necessary, a portion of the slider (124).

11. Bike rack (1) according to the preceding claim, wherein the cap that forms the bend (123) of the retaining arm (12) comprises two parts (123a, 123b) secured to one another so that they can be removed.

12. Bike rack (1) according to any one of the preceding claims, wherein the first portion (121) of the retaining arm (12) is secured to the longitudinal rail (11) so as to be located opposite a surface (111) of the longitudinal rail (11) intended to receive the wheels (21) of the bike (2).
